# EUROPEAN PATENT SPECIFICATION

(11) **EP 1 146 977 B1**
(45) Date of publication and mention of the grant of the patent: **29.01.2003**
(21) Application number: 99963682.2
(22) Date of filing: 30.12.1999
(51) Int. Cl.: B22D 11/06, C04B 35/66

(54) **REFRACTORY PLATES FOR CONTINUOUS CASTING MACHINES OF THIN FLAT PRODUCTS**
FEUERFEST-PLATTEN FÜR STRANGGIESSANLAGEN ZUR ERZEUGUNG VON DÜNNEN FLACHPRODUKTEN
PLAQUES REFRACTAIRES POUR MACHINES DE COULEE CONTINUE DESTINEES A FABRIQUER DES ARTICLES PLATS ET FINS

(30) Priority: 31.12.1998 IT RM980820
(43) Date of publication of application: 24.10.2001
(73) Proprietor: Thyssenkrupp Acciai Speciali Terni S.p.A., 05100 Terni (IT); VOEST-ALPINE INDUSTRIEANLAGENBAU GESELLSCHAFT m.b.H., A-4020 Linz (AT)
(72) Inventor: GUASTO, Giuseppe, Centro Sviluppo Materiali S.p.A., 00129 Rome (IT); TONELLI, Riccardo, Centro Sviluppo Materiali S.p.A, 00129 Rome (IT)
(74) Representative: Leone, Mario
(86) International application number: PCT/IT99/00430
(87) International publication number: WO 00/040355

(56) References cited:
- PATENT ABSTRACTS OF JAPAN vol. 1997, no. 10, 31 October 1997 (1997-10-31) & JP 09 155509 A (TOSHIBA CERAMICS CO LTD), 17 June 1997 (1997-06-17)
- PATENT ABSTRACTS OF JAPAN vol. 009, no. 330 (M-442), 25 December 1985 (1985-12-25) & JP 60 162557 A (MITSUBISHI JUKOGYO KK), 24 August 1985 (1985-08-24)
- PATENT ABSTRACTS OF JAPAN vol. 014, no. 262 (M-0981), 6 June 1990 (1990-06-06) & JP 02 075450 A (KAWASAKI STEEL CORP;OTHERS: 01), 15 March 1990 (1990-03-15)

## Description

The present invention relates to an improvement for refractory plates for the side containment in continuous casting machines of thin flat products such as a strip, and to a process for the manufacture thereof.

Usually, the continuous casting machines of thin flat bodies have a pair of parallel counterrotating rolls which internally are cooled with water. At each side thereof face two flat walls, each of them having a refractory plate, are located, thus constituting the mould. During the casting, the plates are kept abutting onto each side of the rolls, thus enabling the side containment of the molten metal. The molten product cast between said rolls forms a thin flat product.

Various problems subsist, due to the high temperatures reached at the starting and in the operation for these kind of apparatuses such as the abovementioned. In fact, reaching high temperatures entails remarkable strains to the said refractory plates and to the casting rolls also. Plate strains crop up already at the preheating stage thereof, whereas the roll strains derive from the contact of the same with the molten metal during the casting for the thin strip forming. These strains, mainly taking place at the initial stages of the casting, make it difficult to realise a correct coupling of the refractory plates onto the arc of contact with the casting rolls. This can promote molten metal penetrations, actually hindering the effective containment of the molten metal inside the mould.

Therefore, in order to overcome this problem the plate material should be relatively soft, thus enabling the rotating rolls to swiftly abrade the plate material at the starting of the process obtaining a satisfactory surface coupling, thus providing a seal against molten metal penetrations.

On the other hand, in order to ensure long enough casting times the plate is required not to wear out too rapidly during the steady state.

Moreover, the adopted material must possess non-wettability and chemical inertia characteristics towards the molten metal, as well as be resistant to the thermal shock caused by the contact with the molten metal at the start of the casting. The materials most widely used in the state of the art for the forming of the portion of the plate contacting the rolls and the molten metal, are products made of BN, SiON and/or compounds thereof, as a monolithe or as inserts.

Such types of material possess the aforedescribed chemical and physical characteristics, but being relatively soft products, have a low abrasion wear and thermal resistance.

The refractory plates for the side containment thus formed are subject to a rapid wear, unavoidably leading to a fast consumption of the aforesaid plates, with the entailed premature shutdown of the casting process. This makes impossible the industrial manufacture of big volumes of a thin flat products such as strips or the like.

Over the years, various technical solutions for a lubrication of the area of contact between the refractory plates and the rolls have been proposed, aimed at the reducing of the friction, and therefore the wear of the plate materials. One of these solutions lies in the use of liquid lubricants, e.g. various greases and oils or solid ones as graphite and boron nitride that are fed at the entrance of the contacting area between the refractory plates and the edges of the rolls. In the operative thermal conditions the solvent-carried lubricants exhibit a low effectiveness, as in practice they are quickly degraded and volatilised, whereas the solid lubricants can penetrate only a small fraction of the contacting area between the roll and the refractory plate. Moreover, in both instances steel bath pollution problems might arise.

Another technical solution is disclosed in the patent EP 0588743 B1, providing thin film coatings onto the aforesaid plates, made with self-lubricating polymers and having thickness comprised between 0.01ö0.1 mm, added to the refractory materials at the contact area with the rolls.

Such coatings, although charged with glass and/or metallic fibres, are unavoidably destined to a rapid wearing due to the scanty added thickness thereof and the thermal conditions of the process, both for the abrasive action exerted by the compression of the rotating rolls and for the operative temperatures of the system. All this makes the use of self-lubricating polymeric structures, even special ones such as Teflon or the PFE, non suitable to overcome the problems of the wear of the refractory plate at the area contacting the rolls, and the correct coupling thereof.

However, self-lubricating films of reduced thickness do not promote a reduction in the wear of the refractory material at the starting of the casting process, as would instead be desirable from the start of the process, a correct coupling between plates and rolls, thus preventing a possible penetration of the molten metal between the two contacting walls. Moreover, if such thin coatings that operate under such prohibitive thermomechanical conditions are worn or removed, for instance by a molten metal penetration, the problem of the wear of the underlying refractory material crops up anew in its entirety. An alternative technology is disclosed in JP03207554A and US-A-5247987 wherein side dams are provided with a multi-layer structure in order to promote an initial wearing of the same from the very starting of the casting process.

Therefore, it is an object of the present invention to overcome the abovementioned drawbacks by providing plates for the side containment in continuous casting machines which are suitable for rapidly adapting to the pattern of the roll edge thus avoiding cracks along the contact area between the plate and the roll, cracks that can easily lead to molten metal penetrations.

Another object of the present invention is to provide plates for the side containment of continuous casting machines which are suitable to overcome the problem of the premature abrasion of the same, thereby increasing the length of the entire casting process and therefore the volume for each individual casting.

Therefore, according to the present invention, a refractory plate member is provided for the side containment in continuous casting machines of the type including two counterrotating rolls, said plate member including two or more overlapped ceramic and/or refractory layers, wherein the first layer of said plate member is suitable for contacting the rolls and is made of a material that can be easily wearied under the action of said rolls during the starting step, and the second layer underlying said first layer of material being made of a material having a very high wear and thermal shock resistance, the plate member being characterised in that
said first layer is made of a material including 20 to 30% BN by weight with respect to the total weight; the remaining weight being made of Al₂O₃ and/or SiO₂ and/or SiC and/or ZrO₂ and/or SiAlON and by a refractory fibrous casting having a aluminium and/or silicon/aluminium and/or zirconium-based matrix, said casting being realised with Al₂O3₃ and/or SiO2₂ and/or ZrO2₂ powders having a size grain of over 60 µm; and
said second layer comprises a graphitic carbon material obtained through a «hot pressing» process starting from a carbon matrix, with a grain size comprised from 30 to 250 µm wherein graphite «flakes» having a size comprised from 50 to 125 µm and a final porosity from 6 to 15% are incorporated. Advantageously, according to the present invention, the refractory plate for the side containment of the molten metal in a mould is made of at least one member made of two or more overlapped layers of refractory and/or ceramic material having different abrasion wear resistance characteristics. In fact, the plate member consists of an outer layer made of a material that can be quickly wearied by the sliding action of the rolls during the starting of the casting process. Thus, during the starting phase when the plates are pressed against the rolls sides and prior to the pouring of the molten metal, the refractory material is rapidly wearied at the contacting area by the edges of the rolls that indent the plates for a thickness sufficient to ensure the optimum containment of the molten metal, that is subsequently cast between the rolls.

Advantageously, the coupling obtained with the described step enables to avoid the formation of cracks in the contact area between the rolls and the side containment plates, and therefore the possible molten metal penetrations.

Moreover, always according to the present invention, the material forming said outer layer has non-wettability, chemical inertia to the molten metal, and thermal shock resistance required by the casting process.

Further, the innermost layer of the plate member, i.e. the layer not directly contacting the molten bath, is advantageously realised in a refractory and/or ceramic material characterised by high hardness, high mechanical high temperature wear and self-lubricating features.

According to the embodiment of the invention, this allows an optimal side containment of the molten bath, because after the outermost layer is wearied, the rolls sides rapidly contact the underlying layer, which is characterised by a very high wear resistance, very small friction coefficient, allowing therefor very limited consumption and thus enabling the implementation of prolonged castings of thin flat products.

A further advantage provided by the invention is that of maintaining in the central zone of the plate contacting the molten metal, a layer of material having suitable chemical and physical characteristics suitable for resisting to the molten metal attack, demanding to the underlying layer the sole function of resisting the hot wear caused by the casting rolls. In fact, the outer layer is solely removed along the sliding arc of contact area of the rolls.

A detailed description of a preferred embodiment of the present invention will be disclosed hereinafter, given by way of example and not for limitative purposes, making reference to the annexed drawings, wherein:
figure 1 is a perspective schematic view of a general apparatus for the continuous casting of flat products;
figure 2 is a schematic view of a plate member according to the present invention;
figure 3 is a schematic view of a plate incorporating a plate member according to the present invention.

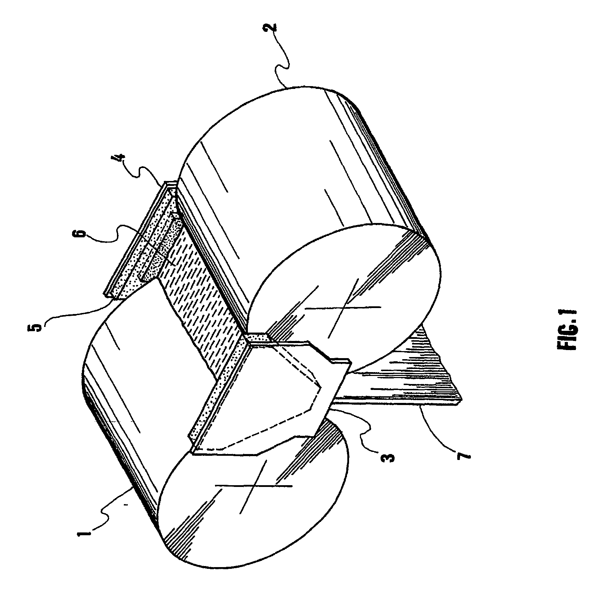

Making reference to figure 1, a machine for the continuous casting of thin flat products is schematically shown, the machine having a pair of counterrotating rollers 1 and 2, internally cooled with water and parallel axes of rotation thereof. At the side faces of said rolls 1, 2 two side walls 3 and 4 are positioned, having respective refractory plates 5, the latter when kept compressed against the casting rolls enable the side containment of a molten metal 6 cast between the rolls 1, 2 and said walls 3, 4. The rotation of said rolls 1 and 2 with the molten metal cast therebetween, forms a thin flat product 7.

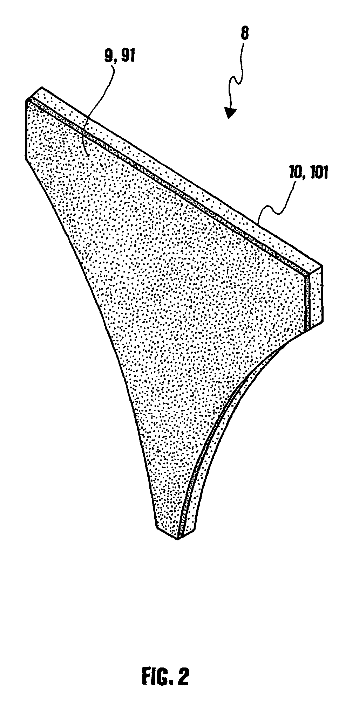

Referring now to figure 2, in it a plate member according to the present invention is schematically shown.

According to a first embodiment of the present invention, the plate member 8 is implemented with two or more layers, a first outermost layer 9 thereof being destined to contact the rolls 1, 2 and the molten bath 6. Said first layer 9 is realised in a ceramic product made of boron nitride or compounds thereof, characterised by low hardness, chemical inertia and low wettability with respect the molten metal. Preferably, such outer layer 9 has a thickness comprised between 0.2 and 5mm and is located over an innermost layer 10 realised in a material which is characterised by high resistance to mechanical high temperature wear and intrinsic self-lubricating properties, thereby minimising the friction coefficient between the edges of the rolls 1,2 and the material itself.

A graphitic carbon material of a ≥ 50 Shore hardness and a 5-20mm thickness can be used for this layer.

According to this embodiment, the outer layer 9 is made of a material including a mixture of 20 to 30% BN by weight with respect to the total weight, the remaining being made of Al₂O₃ and/or SiO₂ and/or SiC and/or ZrO₂ and/or SiAlON. The material thus realised has an apparent porosity lower than 4%.

Further, according to the embodiment, the inner layer 10 is made of a graphitic carbon material obtained through a hot pressing process starting from a carbon matrix with a grain size comprised from 30 to 250µm wherein graphite flakes with a size comprised from 50 to 125µm are incorporated. Thus, a material having a porosity from 6 to 15% is obtained.

It has to be pointed out that the plate member thus formed can be obtained with an isostatic hot pressing as well as with a simultaneous sintering of these two layers.

According to a second embodiment of the plate member of the present invention, the same is realised with a first outer layer 91 made of a refractory fibrous casting of a aluminium and/or silicon-aluminium and/or zirconium oxide-based matrix, thus having low hardness and being easily wearied by the rotating action of the rolls during the casting. Said refractory fibrous casting is realised with Al₂O3₃ and/or SiO2₂ and/or ZrO2₂ powders and fibres having sizes lower than 60µm, showing the required resistance to chemical attacks and a low wettability with respect to the molten metal.

The material thus formed has a grain size from 10 to 60µm and a porosity comprised from 10 to 15%. The thickness of such outer layer is preferably from 1 to 5 mm.

On the other hand, the material underlying the first layer 91, is the layer 10 which can be made of a graphitic carbon material as the one hereto described in the first embodiment.

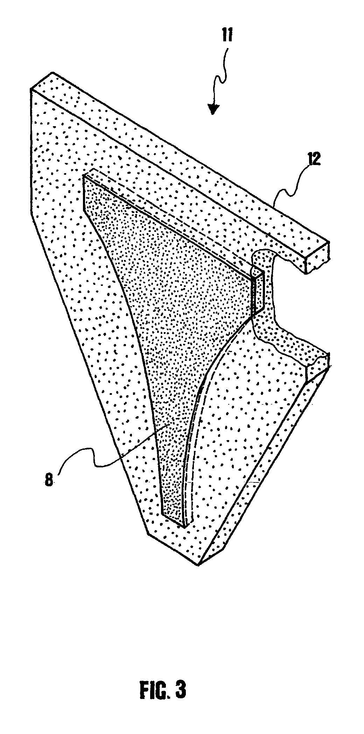

Referring now to figure 3, it shows a plate 11 destined to the side containment in continuous casting machines and constituted according to the present invention. According to the invention, the plate 11 includes a matrix material 12 that, preferably, can be obtained by means of a casting of a SiC-based thixotropic material made of a mix of the following compounds, expressed as percentage by weight with respect to the total weight: Al₂O₃ from 5% to 15%; SiO₂ from 2% to 4.5%; SiC from 80% to 95%; the remaining substantially being impurities.

Inside of said matrix 12 and at the contacting area of the edges of the rolls 1 and 2, a plate member 8 like the one hereto extensively described is positioned. The positioning of the member 8 onto the matrix can be monolithic or with more inserts obtained through a simultaneous hot pressing or sintering.

Therefore, according to the invention, plates suitable for the side containment in continuous casting machines can be obtained, having regions with different thermo-mechanical features in order to enable a optimum coupling to the side faces of the rolls at the starting of the casting process as well as during the entire casting process, thus enabling the implementation of casting processes free of inconveniences such as the molten metal penetration between the plates and the rolls, or the premature wear of the plates, thereby reducing the manufacture costs and increasing the volume of flat products thus manufactured.

Advantageously, according to the invention and to a further embodiment thereof, it is possible to implement plates having a variety of plate members as inserts incorporated therein, each differing from the others and implemented in the various abovedescribed embodiments thereof, said plate members being positioned along the contacting arc of the edges of the rolls onto the plate, so as to obtain different thermomechanical features of the plate itself, and according to the use and to the type of molten metal to which the machine is provided.

The present invention is not limited to the abovedisclosed embodiments, and it covers all the different embodiments included within the scope of the following claims.

## Claims

1. A refractory plate member (8) for the side containment in continuous casting machines having two counterrotating rolls (1,2), said plate member (8) including two or more overlapped ceramic and/or refractory layers (9;91,10), wherein the first layer (9;91) of said plate member (8) is apt to contact the rolls (1,2) and is made of a material suitable to be easily wearied under the action of said rolls during the starting step, and the second layer (10) underlying said first layer of material (9;91) being made of a material having a very high wear and thermal shock resistance, the plate member (8) being **characterised in that**:
* said first layer is made of a material (9) including from 20 to 30% BN by weight with respect to the total weight; the remaining comprising Al2O3 and/or SiO2 and/or SiC and/or ZrO2 and/or SiAlON, or a refractory fibrous casting matrix (91) having a aluminium and/or silicon/aluminium and/or zirconium based, said refractory fibrous casting (91) being constituted with Al2O3 and/or SiO2 and/or ZrO2 powders having size grains of lower than 60µm; and
* said second layer comprises a graphitic carbon material (10) obtained through a hot pressing process starting from a carbon matrix, with a grain size comprised from 30 to 250µm, wherein graphite flakes having a size from 50 to 125µm and a final porosity from 6 to 15% are incorporated.

2. The plate member (8) according to claim 1, wherein said two or more layers (9;91,10) are monolithic, obtained by means of a simultaneous isostatic hot pressing of two or more overlapped materials, intimately composite and chemically bound therebetween.

3. The plate member (8) according to claim 1, wherein the two or more layers of material (9;91,10) are obtained by means of a simultaneous uniaxial cold pressing of overlapped ceramic mixtures and of a subsequent sintering thereof.

4. The plate member (8) according to any of the claims 1 to 3, wherein said first layer apt to contact the rolls (1,2) is made of a first refractory and/or ceramic material (9,91) applied as casting, cement or coating onto a second refractory material (10), the second refractory material (10) being obtained by means of a isostatic hot pressing or by a uniaxial cold pressing and a subsequent sintering thereof.

5. The plate member (8) according to any one of the preceding claims, wherein the thickness of said first layer (9,91) is comprised in the range 0.5-5mm.

6. The plate member (8) according to any one of the preceding claims, wherein each of the materials forming said two or more layers (9,91,10) of the plate member (8) has a thermal expansion coefficient which does not differs from the other of more than 50%.

7. A side containment (11) plate for molten metal in continuous casting machines having a pair of counterrotating rolls (1,2), the plate (11) incorporating at least one plate member (8) formed according to claims 1 to 6, each of said plate members (8) being mounted on said plate (11) so as to form a monolithic refractory structure.

8. The side containment plate (11) for molten metal in continuous casting machines according to claim 7, wherein said at least one plate member (8) is located at the contacting area with the molten metal and the rolls (1,2).

9. The side containment plate (11) for molten metal in continuous casting machines according to claim 7, including one or more inserts each being formed by a plate member (8) according to claims 1 to 6.

10. The side containment plate (11) for molten metal in continuous casting machines according to the preceding claim, wherein each of said inserts is formed by different materials and is located at the area contacting the molten metal and at the area contacting the rolls (1,2).

## Patentansprüche

1. Feuerfestes Plattenelement (8) für das seitliche Einschließen bei Stranggussmaschinen mit zwei gegenläufigen Walzen (1, 2), wobei das Plattenelement (8) zwei oder mehr einander überlappende keramische und/oder feuerfeste Schichten (9; 91, 10) enthält, wobei die erste Schicht (9; 19) des Plattenelementes (8) mit den Walzen (1, 2) in Kontakt kommen kann und aus einem Material besteht, das sich dazu eignet, unter der Wirkung der Walze während des Anfangsschritts leicht verschlissen zu werden, und die zweite Schicht (10), die unter der ersten Schicht aus Material (9; 91) liegt, aus einem Material besteht, das sehr hohe Verschleiß- und Wärmewechselbeständigkeit hat, wobei das Plattenelement (8) **dadurch gekennzeichnet ist, dass**:
- die erste Schicht aus einem Material (9) besteht, das von 20 bis 30 Gew.-% BN bezüglich des Gesamtgewichtes enthält, wobei der Rest Al₂O₃ und/oder SiO₂ und/oder SiC und/oder ZrO₂ und/oder SiAlON oder eine feuerfeste faserartige Gießmatrix (91) mit einer Aluminium- und/oder Silizium/Aluminiumund/oder Zirkon-Basis umfasst, wobei der feuerfeste faserartige Guss (91) mit Al₂O₃- und/oder SiO₂ und/oder ZrO₂-Pulvern gebildet wird, die Korngrößen unter 60 µm haben; und
- die zweite Schicht ein graphitisches Kohlenstoffmaterial (10) umfasst, das in einem Warmpressverfahren von einer Kohlenstoffmatrix ausgehend gewonnen wird, wobei eine Korngröße von 30 bis 250 µm reicht und wobei Graphitflocken mit einer Größe zwischen 50 und 125 µm und einer Endporosität von 6 bis 15 % integriert sind.

2. Plattenelement (8) nach Anspruch 1, wobei die zwei oder mehr Schichten (9; 91, 10) monolithisch sind und über ein simultanes isostatisches Warmpressen von zwei oder mehr einander überlappenden Materialien gewonnen werden, die engen Verbund und chemische Bindung untereinander aufweisen.

3. Plattenelement (8) nach Anspruch 1, wobei die zwei oder mehr Schichten aus Material (9; 91, 10) durch ein simultanes einachsiges Kaltpressen einander überlappender keramischer Gemische und ein anschließendes Sintern derselben gewonnen werden.

4. Plattenelement (8) nach einem der Ansprüche 1 bis 3, wobei die erste Schicht, die mit den Walzen (1, 2) in Kontakt kommen kann, aus einem ersten feuerfesten und/oder keramischen Material (9, 91) besteht, das als Guss, Zement oder Beschichtung auf ein zweites feuerfestes Material (10) aufgebracht wird, wobei das zweite feuerfeste Material (10) durch ein isostatisches Warmpcessen oder ein einachsiges Kaltpressen und ein anschließendes Sintern desselben gewonnen wird.

5. Plattenelement (8) nach einem der vorangehenden Ansprüche, wobei die Dicke der ersten Schicht (9, 91) im Bereich 0,5-5 mm liegt.

6. Plattenelement (8) nach einem der vorangehenden Ansprüche, wobei jedes der Materialien, das die zwei oder mehr Schichten (9, 91, 10) des Plattenelementes (8) bildet, einen Wärmeausdehnungskoeffizienten hat, der sich von dem anderen nicht um mehr als 50 % unterscheidet.

7. Seiteneinschließungsplatte (11) für geschmolzenes Metall in Stranggussmaschinen mit einem Paar gegenläufiger Walzen (1, 2), wobei die Platte (11) wenigstens ein Plattenelement (8) enthält, das entsprechend den Ansprüchen 1 bis 6 ausgebildet wird, wobei jedes der Plattenelemente (8) so an der Platte (11) angebracht wird, dass eine monolithische feuerfeste Struktur ausgebildet wird.

8. Seiteneinschließungsplatte (11) für geschmolzenes Metall in Stranggussmaschinen nach Anspruch 7, wobei das wenigstens eine Plattenelement (8) sich in dem Kontaktbereich mit dem geschmolzenen Metall und den Walzen (1, 2) befindet.

9. Seiteneinschließungsplatte (11) für geschmolzenes Metall in Siranggussmaschinen nach Anspruch 7, die einen oder mehrere Einsätze enthält, die jeweils durch ein Plattenelement (8) nach den Ansprüchen 1 bis 6 gebildet werden.

10. Seiteneinschließungsplatte (11) für geschmolzenes Metall in Stranggussmaschinen nach dem vorangehenden Anspruch, wobei jeder der Einsätze durch unterschiedliche Materialien gebildet wird und sich in dem Bereich, der mit dem geschmoizenen Metall in Kontakt kommt, und in dem Bereich, der mit den Walzen (1, 2) in Kontakt kommt, befindet.

## Revendications

1. Elément de plaque réfractaire (8) pour le confinement latéral dans des machines de coulée continue ayant deux rouleaux tournant en sens inverse (1, 2), ledit élément de plaque (8) comportant deux ou plus de deux couches de céramique et/ou réfractaire en chevauchement (9 ; 91, 10), la première couche (9 ; 91) dudit élément de plaque (8) étant apte à venir en contact avec les rouleaux (1, 2), et étant constituée d'un matériau adapté pour être facilement usé sous l'action desdits rouleaux pendant l'étape de démarrage, et la seconde couche (10) sous-jacente à ladite première couche de matériau (9 ; 91) étant constituée d'un matériau ayant une résistance à l'usure et aux chocs thermiques très élevée, l'élément de plaque (8) étant **caractérisé en ce que** :
ladite première couche est constituée d'un matériau (9) comportant de 20 à 30 % en poids de BN par rapport au poids total, le reste étant constitué de Al203 et/ou SiO2 et/ou SiC et/ou ZrO2 et/ou SiAlON, ou d'une matrice de coulée fibreuse réfractaire (91) à base d'aluminium et/ou silicium/aluminium et/ou zirconium, ladite coulée fibreuse réfractaire (91) étant constituée de poudres Al203 et/ou SiO2 et/ou ZrO2 ayant des grains d'une dimension inférieure à 60 µm, et
ladite seconde couche comporte un matériau de carbone graphitique (10) obtenu par l'intermédiaire d'un processus de pressage à chaud en commençant à partir d'une matrice de carbone, ayant une dimension de grains comprise entre 30 et 250 µm, dans laquelle sont incorporés des éclats de graphite ayant une dimension de 50 à 65 µm et une porosité finale 6 à 15 %.

2. Elément de plaque (8) selon la revendication 1, dans lequel deux ou plus de deux couches (9 ; 91, 10) sont monolithiques, obtenues par un pressage à chaud isostatique simultané de deux ou de plus de deux matériaux en chevauchement, formant de manière intime un composite et fixé chimiquement entre eux.

3. Elément de plaque (8) selon la revendication 1, dans lequel les deux ou plus de deux couches de matériaux (9 ; 91, 10) sont obtenues par un pressage à froid uni-axial simultané de mélanges de céramique en chevauchement, et d'un frittage successif de celles-ci.

4. Elément de plaque (8) selon l'une quelconque des revendications 1 à 3, dans lequel la première couche apte à être en contact avec les rouleaux (1, 2) est constituée d'un premier matériau réfractaire et/ou de céramique (9, 91) appliqué sous la forme d'une coulée, de ciment ou d'un revêtement sur un second matériau réfractaire (10), le second matériau réfractaire (10) étant obtenu par l'intermédiaire d'un pressage à chaud isostatique ou d'un pressage à froid uni-axial, et d'un frittage successif de celle-ci.

5. Elément de plaque (8) selon l'une quelconque des revendications précédentes, dans lequel l'épaisseur de ladite première couche (9, 91) est dans la plage allant de 0,5 à 5 mm.

6. Elément de plaque (8) selon l'une quelconque des revendications précédentes, dans lequel chacun des matériaux formant lesdites deux ou plus de deux couches (9 ; 91, 10) de l'élément de plaque (8) ont un coefficient de dilatation thermique qui ne diffère pas de l'autre de plus de 50 %.

7. Plaque de confinement latéral (11) pour métal en fusion dans des machines de coulée continue ayant une paire de rouleaux tournant en sens inverse (1, 2), la plaque (11) comportant au moins un élément de plaque (8) formé selon l'une quelconque des revendications 1 à 6, chacun desdits éléments de plaque (8) étant monté sur ladite plaque (11) de manière à former une structure réfractaire monolithique.

8. Plaque de confinement latéral (11) pour métal en fusion dans des machines de coulée continue selon la revendication 7, dans laquelle ledit au moins un élément de plaque (8) est positionné au niveau de la zone de contact avec le métal en fusion et les rouleaux (1, 2).

9. Plaque de confinement latéral (11) pour métal en fusion dans des machines de coulée continue selon la revendication 7, comportant une ou plusieurs pièces rapportées chacune formée par un élément de plaque (8) selon l'une quelconque des revendications 1 à 6.

10. Plaque de confinement latéral (11) pour métal en fusion dans des machines de coulée continue selon l'une quelconque des revendications précédentes, dans la quelle chacune desdites pièces rapportées est formée par des matériaux différents, et est positionnée au niveau de la zone de contact avec le métal en fusion et au niveau de la zone en contact avec les rouleaux (1,2).
